# EUROPÄISCHE PATENTANMELDUNG

(11) **EP 1 901 116 A2**
(43) Veröffentlichungstag der Anmeldung: **19.03.2008**
(21) Anmeldenummer: 07017446.1
(22) Anmeldetag: 06.09.2007
(51) Int. Cl.: G03B 17/18

(54) **Kamerasystems, Verfahren zum Betreiben eines Kamerarsystems und Sensoreinrichtung eines Kamersystems**

(30) Priorität: 14.09.2006 DE 102006044786
(71) Anmelder: Schefenacker Vision Systems Germany GmbH & Co. KG, 71409 Schwaikheim (DE); Schefenacker Patents S.à.r.l., 2346 Luxembourg (LU)
(72) Erfinder: Linsenmaier, Frank, 71384 Weinstadt (DE); Mack, Bernd, 73630 Remshalden (DE); Eder, Oliver, 75446 Wiernsheim-Pinache (DE)
(74) Vertreter: Kaufmann, Ursula Josefine

(57) **Zusammenfassung**

Die Erfindung betrifft ein Kamerasystem eines kamerabasierten Analysesystems und/oder Assistenzsystems eines Fahrzeugs, umfassend eine Kamera mit einem optischen Strahlengang (12), der wenigstens ein optisches Element zum Leiten von Bildinformation zu einem lichtempfindlichen Bildsensor (14) aufweist. Wenigstens ein Prüfstrahl (22) ist in einen eingangsseitig vor dem Strahlengang (12) angeordneten transparenten Prüfkörper (30) einkoppelbar, und abhängig von einem Verschmutzungsgrad des Prüfkörpers (30) ist wenigstens ein verschmutzungsindikativer Teilstrahl (24) aus dem Prüfkörper (30) auf einen Sensor (14a) zum Empfangen des verschmutzungsindikativen Teilstrahls (24) lenkbar.

## Beschreibung

Die Erfindung betrifft ein Kamerasystem, ein Verfahren zum Betreiben eines Kamerasystems und eine Sensoreinrichtung eines Kamerasystems nach den Oberbegriffen der unabhängigen Ansprüche.

Es ist bekannt, in Assistenzsystemen von Fahrzeugen Kameras einzusetzen, um beispielsweise die Umgebung des Fahrzeugs zu erfassen. Bei schlechten Sichtverhältnissen in der Umgebung des Fahrzeugs ist der Kontrast der erfassten Bilder häufig ungenügend. Dabei besteht das Problem, dass schlechte Sichtverhältnisse nicht von einer bloßen Verschmutzung der Kamera unterschieden werden können. Ebenso kann während des Betriebs der Verschmutzungsgrad sich ändern. Berechnungsalgorithmen einer üblichen Software, welche die Bildinformation der Kamera auswertet, können jedoch nur sehr begrenzt eine stetig zunehmende Verschmutzung erkennen.

Aufgabe der Erfindung ist es, ein Kamerasystem und ein Verfahren zum Betreiben eines Kamerasystems anzugeben, mit dem eine Verschmutzung der Kamera erkannt werden kann. Weiterhin soll eine Sensoreinrichtung dazu geschaffen werden.

Die Aufgabe wird durch die Merkmale der unabhängigen Ansprüche gelöst. Vorteilhafte Ausgestaltungen sind Gegenstand der weiteren Ansprüche.

Das erfindungsgemäße Kamerasystem eines kamerabasierten Analysesystems und/oder Assistenzsystems eines Fahrzeugs umfasst eine Kamera mit einem optischen Strahlengang, der wenigstens ein optisches Element zum Leiten von Bildinformation zu einem lichtempfindlichen Bildsensor aufweist. Wenigstens ein Prüfstrahl ist kameraeingangsseitig in einen vor dem Strahlengang angeordneten transparenten Prüfkörper einkoppelbar. Abhängig von einem Verschmutzungsgrad des Prüfkörpers ist wenigstens ein verschmutzungsindikativer Teilstrahl aus dem Prüfkörper auf einen Sensor zum Empfangen des verschmutzungsindikativen Teilstrahls lenkbar. Dadurch, dass der Prüfstrahl an dem Prüfkörper, welcher an seiner äußeren Oberfläche der Umgebung der Kamera und damit möglicher Verschmutzung ausgesetzt ist, Verschmutzung detektiert, kann ein Signal, dass von der Umgebung in die Kamera geleitet wird, hinsichtlich eines Verschmutzungsgrads bewertet werden. Der Prüfstrahl wird bei vorhandener Verschmutzung in seiner Intensität beeinflusst, so dass der auf den Sensor zurückgeleitete Teilstrahl eine um den Grad der Verschmutzung veränderte Intensität aufweist. Dazu ist der Prüfkörper zweckmäßigerweise so ausgebildet, dass der Prüfstrahl gut einkoppeln kann, beispielsweise durch eine geeignete Oberflächenstruktur des Prüfkörpers. Als Bildinformation soll eine Information beispielsweise über einen Kontrast und/oder eine Helligkeit bzw. Intensität und/oder eine Farbinformation und/oder eine Bildschärfe verstanden werden. Vorzugsweise wird die Bildinformation dazu verwendet, um eine Objekterkennung durchzuführen oder etwa ein Bild der Umgebung darzustellen.

So kann sicher unterschieden werden, ob ein beobachteter geringer Kontrast eines vom Kamerasystem erfassten Bildes beispielsweise durch Nebel oder Rauch, oder durch eine an der Kamera bzw. dem Prüfkörper anhaftende Verschmutzung herrührt. Gegebenenfalls kann bei festgestellter Verschmutzung ein Warnhinweis an den Nutzer der Kamera, beispielsweise einen Fahrzeugführer, ausgegeben werden. Denkbar ist auch, dass eine automatische Reinigungsprozedur des Kamerasystems bzw. des Prüfkörpers durchgeführt wird. So kann in einem Fahrzeug beispielsweise ein Wischer über den Prüfkörper fahren und die anhaftende Verschmutzung beseitigen. Zweckmäßigerweise deckt der Prüfkörper das Kameraobjektiv ab, so dass dieses vor unmittelbarer Verschmutzung geschützt ist. Die Kamera selbst kann beispielsweise eine so genannte CCD-Kamera (CCD = charged coupled device) mit einem CCD-Chip als Bildsensor sein. Dieser besteht üblicherweise aus tausenden von einzelnen Zellen (Pixel) aus Halbleitermaterial, mit der in an sich bekannter Weise eine flächige Bildinformation gewonnen werden kann. Im einfachsten Fall kann jedoch auch bereits ein einzelner Pixel ausreichend sein. Es können auch andere Kamerasysteme, etwa CMOS-Kameras und andere geeignete lichtempfindliche Sensoren, wie etwa CMOS-Sensoren (CMOS = complementary metal oxide semiconductor), PMD-Sensoren (PMD = photonic mixer device), LIDAR-Sensoren (LIDAR = light detection and ranging), Laser-Sensoren, eingesetzt werden. Vorteilhaft kann der Prüfstrahl eine oder mehrere ausgewählte Wellenlängen aufweisen, auf welche der Sensor besonders empfindlich reagiert und/oder die auf Verschmutzung besonders empfindlich ansprechen.

Der Sensor zum Empfangen des verschmutzungsindikativen Teilstrahls kann vorteilhaft Bestandteil des lichtempfindlichen Bildsensors sein, der Bestandteil der Kamera ist. Dabei kann ein Bereich des Bildsensors für den Teilstrahl reserviert sein, gegebenenfalls speziell an die Prüfstrahl- bzw. Teilstrahl-Wellenlänge angepasst, oder der Bildsensor wird zeitlich getaktet betrieben, wobei in einem oder mehreren ausgewählten Zeitintervallen der Bildsensor den Teilstrahl erfasst und in anderen Zeitintervallen die gewünschte Bildinformation erfasst wird. Günstig ist, wenn der Teilstrahl auf einen Bereich des Bildsensors gelenkt werden kann, vorzugsweise mittels eines Lichtleiters, der nicht für die eigentliche Bildinformation essentiell ist, etwa auf einen Randbereich des Bildsensors. Ebenso können die Einkoppelbedingungen, beispielsweise der Einfallswinkel auf den Prüfkörper, so gewählt werden, dass ein Austritt des Teilstrahls vorzugsweise so erfolgt, dass ein Überlappen von Bereichen, die für die Bildinformation essentiell sind und einem Bereich, der bevorzugt für den Empfang des verschmutzungsindikativen Teilstrahls vorgesehen ist, vermieden wird.

Der verschmutzungsindikative Teilstrahl kann vorteilhaft mit einem Lichtleiter zum Sensor geleitet sein. Dabei kann der Sensor in einem Bereich des Bildsensors angeordnet sein, der für den normalen Betrieb des Bildsensors unkritisch ist. Der normale Betrieb des kamerabasierten Analysesystems und/oder Assistenzsystems bleibt praktisch ungestört.

Vorteilhaft kann das Prüflicht mit einer Wellenlänge ausgestrahlt sein, die spezifisch für eine spezifische Verschmutzungsart ist. Bei einem Fahrzeug können typische Verschmutzungsarten wie Salz, Staub, Öl und dergleichen gezielt und mit hoher Genauigkeit nachgewiesen werden.

Es kann eine Ansteuereinheit so vorgesehen sein, dass alternierend entweder ein verschmutzungsindikativer Teilstrahl gesendet wird oder der Bildsensor in seinem Normalbetrieb arbeitet. Der normale Betrieb des kamerabasierten Analysesystems und/oder Assistenzsystems kann damit sichergestellt werden.

Bevorzugt kann die Kamera eine integrierte Lichtquelle zum Aussenden des Prüfstrahls aufweisen. Dies ermöglicht eine besonders kompakte Anordnung. Bevorzugt kann die Lichtquelle wenigstens eine LED (light emitting diode) umfassen. Zweckmäßigerweise sind mehrere LEDs vorgesehen, die vorzugsweise symmetrisch um eine optische Achse der Kamera angeordnet sind, um eine verbesserte Auflösung und Empfindlichkeit zu erreichen.

Zweckmäßigerweise kann der Prüfkörper quer zu einer optischen Achse des optischen Strahlengangs angeordnet sein. Der Prüfkörper kann als Abdeckung des Kameraeingangs dienen und so gleichzeitig die Verschmutzung detektieren und die Kamera schützen.

Vorteilhaft kann derselbe optische Strahlengang für den Teilstrahl vorgesehen sein wie zum Leiten der Bildinformation. Dies ergibt eine weitere Verbesserung der Kompaktheit des Kamerasystems. Sofern der Bildsensor für die Auswertung des Teilstrahls verwendet werden kann, müssen lediglich die Lichtquelle(n) und der Prüfkörper zusätzlich vorhanden sein.

Günstigerweise kann der Prüfkörper eine geringe Reflexion für von außen auf den Prüfkörper einfallende optische Strahlung aufweisen. Der Prüfkörper ist vorzugsweise als ebene Glasplatte oder Kunststoffplatte mit geringer Reflexion ausgebildet. Dazu kann diese mit geeigneten Antireflexschichten beschichtet sein. Die Platte weist zweckmäßigerweise im Eintrittsbereich eine geeignete Einkoppelstruktur auf.

Vorteilhaft können Mittel vorgesehen sein, um eine Aktivierung des Prüfstrahls abhängig von einem Bildkontrast und/oder von Betriebsparametern des Kamerasystems zu bewirken.

Gemäß einer günstigen Ausgestaltung sind vorzugsweise Rechenmittel vorgesehen, um ein vom Bildsensor empfangenes Bildsignal hinsichtlich eines verschmutzungsindikativen Signals zu bewerten. Diese Aufgabe kann von einer entsprechenden, bereits vorhandenen Einrichtung der Kamera selbst vorgenommen werden, wozu die Berechnungsalgorithmen angepasst werden können, mit denen die übliche, vom Bildsensor aufgefangene Bildinformation ausgewertet wird. Ist der Kontrast schlecht, und ist die Intensität des Teilstrahls durch Verschmutzung verändert, können eine Warnung an den Nutzer des Kamerasystems und/oder eine Reinigung des Kamerasystems bzw. des Prüfkörpers erfolgen.

Eine vorteilhafte Platz sparende Anordnung ergibt sich, wenn die Lichtquelle zur Aussendung des Prüfstrahls auf einer Sensorplatine angeordnet ist. Die Platine trägt den Chip der Kamera; die Lichtquelle oder auch mehrere Lichtquellen können neben dem Chip angeordnet sein.

Die eine oder mehrere Lichtquellen zur Aussendung des Prüfstrahls können im optischen Strahlengang, vorzugsweise in einer Linsenanordnung der Kamera, angeordnet sein. Günstig ist, diese möglichst nahe zum Prüfkörper, d.h. nahe am optischen Eingang der Kamera, anzuordnen.

Ebenso ist es möglich, die Strahlung der einen oder mehreren Lichtquellen zur Aussendung des Prüfstrahls mit einem Lichtleiter in den Prüfkörper einzukoppeln. Dann kann die Lichtquelle mit großer Designfreiheit an einem geeigneten Ort platziert werden, ohne auf einen etwaigen beengten Bauraum Rücksicht nehmen zu müssen. Der geeignete Ort kann sogar außerhalb der Kamera sein. Ebenso können Lichtquellen auf der Platine, im Strahlengang und eine Einkopplung der einen oder mehreren Lichtquellen mittels Lichtleiter vorgesehen oder auch nur einzelne Varianten der Anordnungen der Lichtquellen in Kombination vorgesehen sein.

Eine erfindungsgemäße Sensoreinrichtung eines Kamerasystems, insbesondere in einem kamerabasierten Analysesystem und/oder Assistenzsystem eines Fahrzeugs, wobei die Kamera einen optischen Strahlengang zum Leiten von Bildinformation zu einem lichtempfindlichen Sensor umfasst, weist wenigstens eine Lichtquelle zur Bereitstellung wenigstens eines Prüfstrahls, einen Prüfkörper zur Erzeugung eines verschmutzungssensitiven Teilstrahls aus dem Prüfstrahl und einen Sensor auf, der zum Empfangen des verschmutzungsindikativen Teilstrahls vorgesehen ist. Die Sensorenrichtung wird vorzugsweise in Kamerasystemen eingesetzt, die Informationen liefert, bei denen ein ausreichender Kontrast ein wichtiges Kriterium ist, wie etwa bei einer Objekterkennung zur Warnung vor sich annähernden Objekten.

Vorzugsweise kann der Sensor zum Empfangen des verschmutzungsindikativen Teilstrahls Bestandteil eines lichtempfindlichen Bildsensors der Kamera sein.

Der verschmutzungsindikative Teilstrahl kann vorteilhaft mit einem Lichtleiter zum Sensor geleitet sein. Dabei kann der Sensor in einem Bereich des Bildsensors angeordnet sein, der für den normalen Betrieb des Bildsensors unkritisch ist. Der normale Betrieb des kamerabasierten Analysesystems und/oder Assistenzsystems bleibt praktisch ungestört.

Vorteilhaft kann das Prüflicht mit einer Wellenlänge ausgestrahlt sein, die spezifisch für eine spezifische Verschmutzungsart ist. Bei einem Fahrzeug können typische Verschmutzungsarten wie Salz, Staub, Öl und dergleichen gezielt und mit hoher Genauigkeit nachgewiesen werden.

Es kann eine Ansteuereinheit so vorgesehen sein, dass alternierend entweder ein verschmutzungsindikativer Teilstrahl gesendet wird oder der Bildsensor in seinem Normalbetrieb arbeitet. Der normale Betrieb des kamerabasierten Analysesystems und/oder Assistenzsystems kann damit sichergestellt werden.

Der Prüfstrahl kann mit einem Lichtleiter zum Prüfkörper leitbar sein. Der Prüfkörper weist vorzugsweise eine ebene Glas- oder Kunststoffplatte mit einem Einkoppelbereich für den Prüfstrahl auf.

Vorteilhaft können Rechenmittel vorgesehen sein, um ein vom Bildsensor empfangenes Bildsignal hinsichtlich eines verschmutzungsindikativen Signals zu bewerten. Ist ein Kontrast des Bildsignals gut, kann eine eventuelle Verschmutzung toleriert werden. Ist der Kontrast schlecht und der Prüfkörper verschmutzt, ist das Bildsignal nicht mehr zuverlässig.

Das erfindungsgemäße Verfahren sieht vor, dass wenigstens ein Prüfstrahl in einen eingangsseitig vor dem Strahlengang angeordneten transparenten Prüfkörper eingekoppelt wird und abhängig von einem Verschmutzungsgrad des Prüfkörpers wenigstens ein verschmutzungsindikativer Teilstrahl aus dem Prüfkörper auf einen Sensor zum Empfangen des verschmutzungsindikativen Teilstrahls gelenkt und der Teilstrahl hinsichtlich seiner Intensität bewertet wird. Dabei kann vorzugsweise eine Verschmutzung des Kamerasystems bzw. des Prüfkörpers solange toleriert werden, solange der Kontrast der Bildinformation des Kamerasystems ausreichend groß ist. Sobald der Kontrast der Bildinformation schlecht ist, kann geklärt werden, ob dies nur an einer Verschmutzung des Kamerasystems liegt, oder ob tatsächlich schlechte Sichtverhältnisse vorliegen.

Dabei kann bevorzugt der Prüfstrahl abhängig von einem festgestellten unzureichenden Bildkontrast ausgesendet werden. Denkbar ist auch, dass der Prüfstrahl abhängig von anderen Parametern ausgesendet werden kann. So kann bei einem fahrzeugbasierten System bei Betätigung des Scheibenwischers und/oder der Nebelschlussleuchte, wenn potenziell eine Verschmutzung des Kamerasystems vorliegen könnte, ein Prüfstrahl ausgesendet werden.

Vorteilhaft kann das Prüflicht mit einer Wellenlänge ausgestrahlt werden, die spezifisch für eine spezifische Verschmutzungsart ist. Bei einem Fahrzeug können typische Verschmutzungsarten wie Salz, Staub, Öl und dergleichen gezielt und mit hoher Genauigkeit nachgewiesen werden.

Alternierend kann günstigerweise entweder ein verschmutzungsindikativer Teilstrahl gesendet werden oder der Bildsensor in seinem Normalbetrieb arbeiten. Der normale Betrieb des kamerabasierten Analysesystems und/oder Assistenzsystems kann damit sichergestellt werden.

Um Alterungsprozesse des Kamerasystems berücksichtigen zu können, wird zweckmäßigerweise zur Bewertung der Intensität des Teilstrahls ein Referenzwert bei unverschmutztem Prüfkörper bestimmt.

Dabei kann es günstig sein, wenn zur Bewertung der Intensität des Teilstrahls ein gemittelter Referenzwert als Mittelwert von einer Mehrzahl von aufeinander folgenden bestimmten Referenzwerten gebildet wird. Damit kann die Aussagekraft des verschmutzungsindikativen Teilstrahls erhöht werden. Vorteilhaft ist, immer die gleiche Zahl von Referenzwerten heranzuziehen, wobei beispielsweise jeweils der neueste Referenzwert den ältesten ersetzt.

Vorteilhaft wird ein Alarm ausgelöst, wenn die Intensität des Teilstrahls außerhalb einer zulässigen Bandbreite um einen vorgegebenen Referenzwert liegt. Ist das Kamerasystem beispielsweise Bestandteil eines Fahrerassistenzsystems oder dergleichen, bei dem vorzugsweise eine Objekterkennung erfolgt und/oder ein Bild der Umgebung erfasst wird, kann der Fahrer gewarnt werden, dass die Messungen des Assistenzsystems nicht mehr zuverlässig sind, weil die Bilderfassung ungenau geworden ist.

Weitere Vorteile und Einzelheiten der Erfindung werden im Folgenden anhand von in der Zeichnung beschriebenen bevorzugten Ausführungsbeispielen näher erläutert, ohne dass die Erfindung auf diese Ausführungsbeispiele beschränkt ist.

Es zeigen:
- Fig. 1: eine bevorzugte Ausgestaltung eines Kamerasystems mit einer Kamera und einer bevorzugten Sensoreinrichtung zum Erkennen einer Verschmutzung, im Zustand der Durchführung einer Eichmessung;
- Fig. 2: eine bevorzugte Ausgestaltung eines Kamerasystems mit einer Kamera und einer bevorzugten Sensoreinrichtung zum Erkennen einer Verschmutzung nach Fig. 1 mit angelagerten Schmutzpartikeln an einem Prüfkörper, wobei Lichtquellen auf einer Sensorplatine der Kamera angeordnet sind;
- Fig. 3: eine weitere bevorzugte Ausgestaltung eines Kamerasystems mit einer Kamera und einer Sensoreinrichtung zum Erkennen einer Verschmutzung, wobei Lichtquellen in einem Linsensystem der Kamera angeordnet sind;
- Fig. 4: eine weitere bevorzugte Ausgestaltung eines Kamerasystems mit einer Kamera und einer Sensoreinrichtung zum Erkennen einer Verschmutzung, wobei Lichtquellen mit einem Lichtleiter in einen Prüfkörper eingekoppelt sind.

In den Figuren sind funktionell gleich wirkende Elemente mit gleichen Bezugszeichen beziffert.

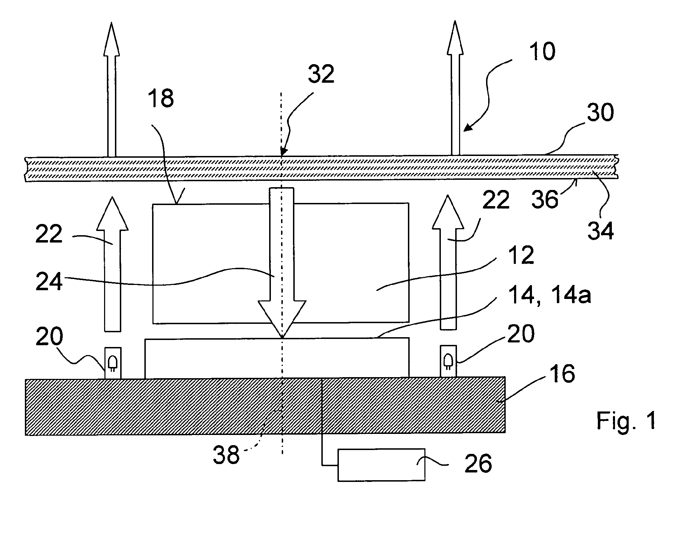

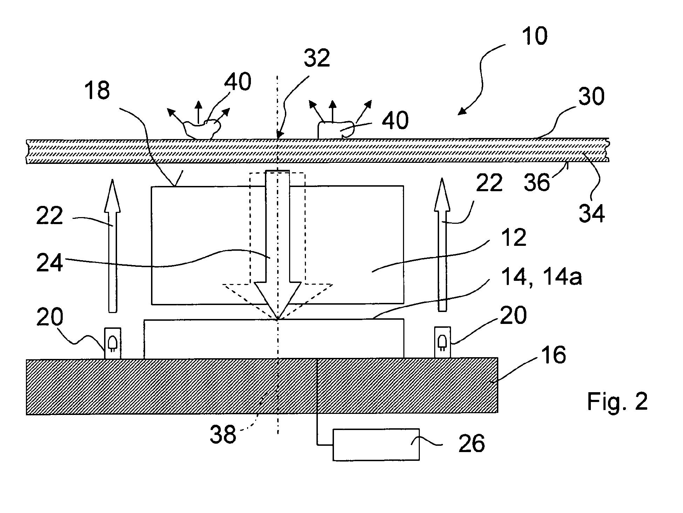

Die Figuren 1 und 2 erläutern die Erfindung anhand eines ersten bevorzugten Kamerasystems 10, insbesondere eines Kamerasystems in einem kamerabasierten Analysesystem und/oder Assistenzsystem eines Fahrzeugs.

Eine nicht näher bezeichnete, schematisch dargestellte Kamera umfasst einen als Linsensystem ausgebildeten, stark vereinfacht dargestellten optischen Strahlengang 12 zum Leiten von Bildinformation von einem Außenbereich der Kamera zu einem lichtempfindlichen Bildsensor 14 im Inneren der Kamera. Der Bildsensor 14 ist auf einer Platine 16 angeordnet. Die Kamera ist beispielsweise als CCD-Kamera oder als CMOS-Kamera ausgebildet.

Der optische Strahlengang 12 weist eine optische Achse 38 auf, die senkrecht zur Platine 16 bzw. zum Bildsensor 14 angeordnet ist. In die Kamera fallendes Licht, wobei darunter vorzugsweise Licht mit einer Wellenlänge zwischen Ultraviolett, sichtbarem Licht und Infrarot verstanden wird, wird vom Bildsensor 14 aufgefangen. Ein Rechenmittel 26 verarbeitet die Information und stellt beispielsweise ein Bild oder einen Kontrast der Umgebung zur Verfügung, welches auf einem nicht dargestellten Bildschirm dargestellt oder in anderer Weise geeignet verarbeitet werden kann.

An einer Lichteintrittseite 18 der Kamera ist ein Prüfkörper 30 in Gestalt einer transparenten Glas- oder Kunststoffscheibe mit geringer Reflexion angeordnet, die quer zur optischen Achse 38 angeordnet ist. Sollte der Strahlengang 12 eine oder mehrere Umlenkungen der einfallenden Strahlung bzw. Knicke aufweisen, so dass nicht eine einzige optische Achse vorhanden ist, ist der Prüfkörper 30 bevorzugt quer zur optischen Achse 38 im Eingangsbereich der Kamera angeordnet. Der Prüfkörper 30 bildet eine Abdeckung des Kameraeingangs und stört auf diese Weise die normale Funktion der Kamera nicht.

Beidseits des Bildsensors 14 angeordnete, bevorzugt als LEDs ausgebildete Lichtquellen 20 senden als Pfeile angedeutete Prüfstrahlen 22 aus, die auf den eingangsseitig vor dem Strahlengang 12 angeordneten transparenten Prüfkörper 30 gerichtet sind und dort von dessen Rückseite 36 her in den Prüfkörper 30 in einem nicht näher ausgeführten Einkoppelbereich einkoppeln. Die eingekoppelte Strahlung kann sich im Innenbereich 34 des Prüfkörpers 30 zu beiden Seiten seiner Längserstreckung ausbreiten. In Figur 1 ist der Prüfkörper 30 in einem definierten, sauberen Zustand dargestellt. Ohne Schmutzpartikel auf dem Prüfkörper 30 gelangt ein Teilstrahl 24 der Prüfstrahlen 22 auf einen verschmutzungsindikativen Sensor 14a, der bevorzugt identisch mit dem Bildsensor 14 ist. Die aufgefangene Intensität des Teilstrahls 24 entspricht einem Referenzwert.

Sind Schmutzpartikel 40 auf seiner Außenseite angelagert, tritt an den Kontaktstellen zwischen Schmutzpartikel 40 und Prüfkörper 30 ein Teil des Prüfstrahls 22 nach außen und wird durch die Schmutzpartikel 40 aufgestreut, während ein anderer Teil des Prüfstrahls 22 einen Teilstrahl 24 bildet, der in das Linsensystem des optischen Strahlengangs 12 eintritt und auf einen verschmutzungsindikativen Sensor 14a gelenkt wird, der bevorzugt identisch mit dem Bildsensor 14 ist. Dies ist in Figur 2 dargestellt.

Der Teilstrahl 24 ist in seiner Intensität stärker verändert, wenn mehr Verschmutzung am Prüfkörper 30 anhaftet und weniger verändert, wenn weniger Verschmutzung am Prüfkörper 30 anhaftet. Die Intensität des Teilstrahls 24 ist indikativ für den Grad der Verschmutzung, was zweckmäßigerweise mittels Eichmessungen ermittelt und zu Auswertezwecken dem Rechenmittel 26 zur Verfügung gestellt werden kann. Dabei kann die Intensität des Teilstrahls 24 je nach Verschmutzungsart gegenüber dem Referenzwert zunehmen oder auch abnehmen, was durch zwei unterschiedliche Pfeilstärken des Teilstrahls 24 angedeutet ist.

Zweckmäßigerweise wird zur Erhöhung der Genauigkeit eine Mittelwertbildung aus mehreren Referenzwerten durchgeführt. Der Mittelwert bzw. der Referenzwert kann in dem Rechenmittel 26 abgelegt werden. Damit können beispielsweise Alterungseffekte des Strahlengangs 12 und/oder des Bildsensors 14, 14a ausgeglichen werden. Die Referenzwertbestimmung kann etwa bei jedem Fahrzeugstart bzw. bei jedem Start des Kamerasystems 10 durchgeführt werden oder in vorgegebenen Zeitabständen, etwa nach einer bestimmten Anzahl von Betriebsstunden des Kamerasystems 10.

Licht, das in einem Bereich 32 des Prüfkörpers 30, der vor dem Kameraeingang angeordnet ist, in den Strahlengang 12 eintritt, kann vom Sensor 14a aufgefangen werden. Der die Verschmutzung anzeigende Teilstrahl 24 kann auf den Sensor 14a bzw. 14 fallen. Die Helligkeit bzw. Intensität des Teilstrahls 24 ist repräsentativ für den Verschmutzungsgrad an der Außenseite des Prüfkörpers 30. Ist die Veränderung der Intensität des Teilstrahls 24 gering, liegt kaum oder keine Verschmutzung vor. Wird dann etwa ein schlechter Kontrast vom Kamerasystem festgestellt, kann beurteilt werden, dass die Sichtverhältnisse schlecht sind. Wird allerdings ein schlechter Kontrast bestimmt, und ist die Veränderung der Intensität des Teilstrahls 24 gegenüber seinem Referenzwert größer als eine tolerierbare Abweichung, liegt eine Verschmutzung des Kamerasystems 10 bzw. des Prüfkörpers 30 vor. Der Nutzer des Kamerasystems 10 erhält dann zweckmäßigerweise eine Warnung, dass das Kamerasystem 10 nunmehr suboptimal arbeitet.

Das Rechenmittel 26 bewertet die Intensität des zurückkommenden Teilstrahls 24 und kann damit ein vom Bildsensor 14 empfangenes Bildsignal beispielsweise hinsichtlich eines verschmutzungsindikativen Signals bewerten und/oder ein Warnsignal an den Benutzer der Kamera initiieren.

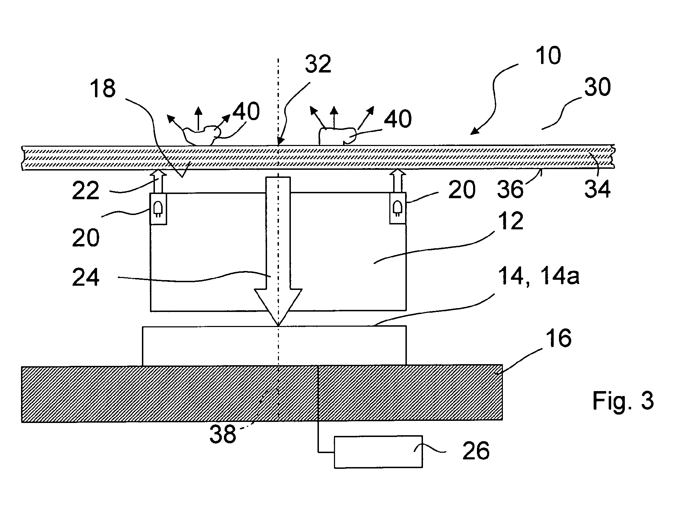

Figur 3 illustriert eine Variante eines bevorzugten Kamerasystems 10, bei dem Lichtquellen 20 zum Aussenden des Prüfstrahls 22 in den optischen Strahlengang 12 integriert sind. Der Aufbau des Systems entspricht weitgehend dem der Figur 1, auf die zur näheren Beschreibung gemeinsamer Elemente verwiesen wird.

Die Lichtquellen 20 sind nahe zum Eingangsbereich an der Eintrittseite 18 der Kamera platziert und damit benachbart zum Prüfkörper 30. Die vorzugsweise als LEDs ausgebildeten Lichtquellen 20 geben eine stark gebündelte, als Pfeile angedeutete Strahlung ab, so dass kein oder kaum ein Strahlungsverlust zu beobachten ist.

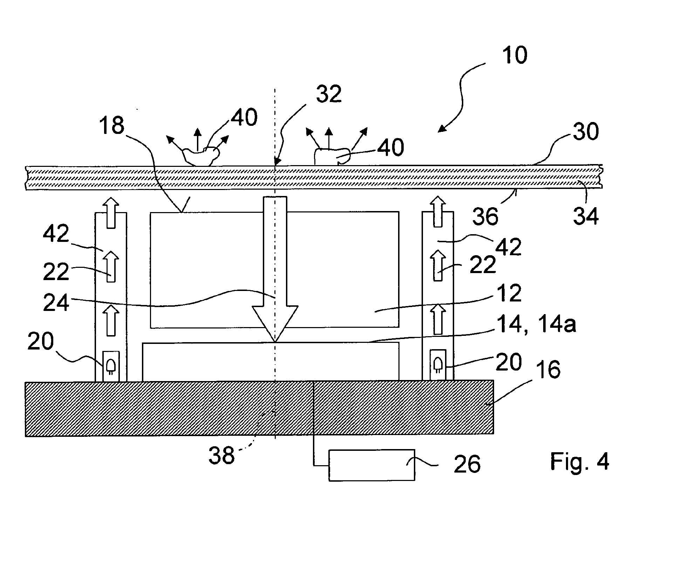

Das in Figur 4 dargestellte Ausführungsbeispiel zeigt eine Variante, die alternativ oder in Kombination mit einem oder beiden der vorne beschriebenen Ausführungsbeispiele vorgesehen sein kann. Auch hier ist die Ausgestaltung weitgehend vergleichbar mit den bereits beschriebenen Ausführungsbeispielen, auf die zur Vermeidung unnötiger Wiederholungen bei der Erläuterung gemeinsamer Elemente verwiesen wird.

Die Lichtquellen 20 zur Aussendung des Prüfstrahls 22 sind auf der Sensorplatine 16 beidseits des Bildsensors 14, 14a angeordnet, wobei der Prüfstrahl 22 mit einem Lichtleiter 42 in den Prüfkörper 30 eingekoppelt ist.

Die erfindungsgemäße Sensoreinrichtung des Kamerasystems 10 umfasst eine Kamera mit einem einen optischen Strahlengang 12 zum Leiten von Bildinformation zu einem lichtempfindlichen Sensor 14, wobei wenigstens eine Lichtquelle 20 zur Bereitstellung des wenigstens einen Prüfstrahls 22, der Prüfkörper 30 zur Erzeugung des verschmutzungssensitiven Teilstrahls 24 aus dem Prüfstrahl 22 und ein Sensor 14a zum Empfangen des verschmutzungsindikativen Teilstrahls 24 vorgesehen ist.

### Bezugszeichen

- 10: Kamerasystem
- 12: Strahlengang
- 14: Sensor
- 14a: Sensor
- 16: Platine
- 18: Eintrittseite
- 20: Lichtquelle
- 22: Prüfstrahl
- 24: Teilstrahl
- 26: Rechenmittel
- 30: Prüfkörper
- 32: Auskoppelbereich
- 34: Innenraum
- 36: Rückseite
- 38: optische Achse
- 40: Schmutzpartikel
- 42: Lichtleiter

## Patentansprüche

1. Kamerasystem eines kamerabasierten Analysesystems und/oder Assistenzsystems eines Fahrzeugs, umfassend eine Kamera mit einem optischen Strahlengang (12), der wenigstens ein optisches Element zum Leiten von Bildinformation zu einem lichtempfindlichen Bildsensor (14) aufweist, **dadurch gekennzeichnet, dass** wenigstens ein Prüfstrahl (22) in einen eingangsseitig vor dem Strahlengang (12) angeordneten transparenten Prüfkörper (30) einkoppelbar ist und abhängig von einem Verschmutzungsgrad des Prüfkörpers (30) wenigstens ein verschmutzungsindikativer Teilstrahl (24) aus dem Prüfkörper (30) auf einen Sensor (14a) zum Empfangen des verschmutzungsindikativen Teilstrahls (24) lenkbar ist.

2. Kamerasystem nach Anspruch 1, **dadurch gekennzeichnet, dass** der Sensor (14a) zum Empfangen des verschmutzungsindikativen Teilstrahls (24) Bestandteil des lichtempfindlichen Bildsensors (14) ist.

3. Kamerasystem nach Anspruch 2, **dadurch gekennzeichnet, dass** der verschmutzungsindikative Teilstrahls (24) mit einem Lichtleiter zum Sensor (14a) geleitet ist, wobei der Sensor (14a) in einem Bereich des Bildsensors (14) angeordnet ist, der für den normalen Betrieb des Bildsensors (14) unkritisch ist.

4. Kamerasystem nach einem der vorhergehenden Ansprüche, **dadurch gekennzeichnet, dass** das Prüflicht mit einer Wellenlänge ausgestrahlt ist, die spezifisch für eine spezifische Verschmutzungsart ist.

5. Kamerasystem nach einem der vorhergehenden Ansprüche, **dadurch gekennzeichnet, dass** eine Ansteuereinheit so vorgesehen ist, dass alternierend entweder ein verschmutzungsindikativer Teilstrahl gesendet wird oder der Bildsensor (14) in seinem Normalbetrieb arbeitet.

6. Kamerasystem nach einem der vorhergehenden Ansprüche, **gekennzeichnet durch** eine integrierte Lichtquelle (20) zum Aussenden des Prüfstrahls (22).

7. Kamerasystem nach einem der vorhergehenden Ansprüche, **dadurch gekennzeichnet, dass** die Lichtquelle (20) eine LED umfasst.

8. Kamerasystem nach einem der vorhergehenden Ansprüche, **dadurch gekennzeichnet, dass** der Prüfkörper (30) quer zu einer optischen Achse (38) des optischen Strahlengangs (12) angeordnet ist.

9. Kamerasystem nach einem der vorhergehenden Ansprüche, **dadurch gekennzeichnet, dass** derselbe optische Strahlengang (12) für den Teilstrahl (24) vorgesehen ist wie zum Leiten der Bildinformation.

10. Kamerasystem nach einem der vorhergehenden Ansprüche, **dadurch gekennzeichnet, dass** der Prüfkörper (30) eine geringe Reflexion für von außen auf den Prüfkörper (30) einfallendes Licht aufweist.

11. Kamerasystem nach einem der vorhergehenden Ansprüche, **dadurch gekennzeichnet, dass** eine Ansteuereinheit vorgesehen ist, um eine Aktivierung des Prüfstrahls (22) abhängig von einem Bildkontrast und/oder von Betriebsparametern des Kamerasystems zu bewirken.

12. Kamerasystem nach einem der vorhergehenden Ansprüche, **dadurch gekennzeichnet, dass** Rechenmittel (26) vorgesehen sind, um ein vom Bildsensor (14) empfangenes Bildsignal hinsichtlich eines verschmutzungsindikativen Signals zu bewerten.

13. Kamerasystem nach einem der Ansprüche 6 bis 12, **dadurch gekennzeichnet, dass** die Lichtquelle (20) zur Aussendung des Prüfstrahls (22) auf einer Sensorplatine (16) angeordnet ist.

14. Kamerasystem nach einem der Ansprüche 6 bis 13, **dadurch gekennzeichnet, dass** die Lichtquelle (20) zur Aussendung des Prüfstrahls (22) im optischen Strahlengang (12) angeordnet ist.

15. Kamerasystem nach einem der Ansprüche 6 bis 14, **dadurch gekennzeichnet, dass** das Licht der Lichtquelle (20) zur Aussendung des Prüfstrahls (22) mit einem Lichtleiter (42) in den Prüfkörper (30) einkoppelbar ist.

16. Sensoreinrichtung eines Kamerasystems eines kamerabasierten Analysesystem und/oder Assistenzsystem eines Fahrzeugs, wobei die Kamera einen optischen Strahlengang (12) zum Leiten von Bildinformation zu einem lichtempfindlichen Sensor (14) umfasst, nach wenigstens einem der vorhergehenden Ansprüche, **dadurch gekennzeichnet, dass** wenigstens eine Lichtquelle (20) zur Bereitstellung wenigstens eines Prüfstrahls (22), einen Prüfkörper (30) zur Erzeugung eines verschmutzungssensitiven Teilstrahls (24) aus dem Prüfstrahl (22) und ein Sensor (14a) zum Empfangen des verschmutzungsindikativen Teilstrahls (24) vorgesehen ist.

17. Sensoreinrichtung nach Anspruch 16, **dadurch gekennzeichnet, dass** der Sensor (14a) zum Empfangen des verschmutzungsindikativen Teilstrahls (24) Bestandteil eines lichtempfindlichen Bildsensors (14) der Kamera ist.

18. Sensoreinrichtung nach Anspruch 16 oder 17, **dadurch gekennzeichnet, dass** der verschmutzungsindikative Teilstrahl (24) mit einem Lichtleiter zum Sensor (14a) geleitet ist, wobei der Sensor (14a) in einem Bereich des Bildsensors (14) angeordnet ist, der für den normalen Betrieb des Bildsensors (14) unkritisch ist.

19. Sensoreinrichtung nach einem der Ansprüche 16 bis 18, **dadurch gekennzeichnet, dass** das Prüflicht mit einer Wellenlänge ausgestrahlt ist, die spezifisch für eine spezifische Verschmutzungsart ist.

20. Sensoreinrichtung nach einem der Ansprüche 16 bis 19, **dadurch gekennzeichnet, dass** eine Ansteuereinheit so vorgesehen ist, dass alternierend entweder ein verschmutzungsindikativer Teilstrahl gesendet wird oder der Bildsensor (14) in seinem Normalbetrieb arbeitet.

21. Sensoreinrichtung nach einem der Ansprüche 16 bis 20, **dadurch gekennzeichnet, dass** der Prüfstrahl (22) mit einem Lichtleiter (42) zum Prüfkörper (30) leitbar ist.

22. Sensoreinrichtung nach einem der Ansprüche 16 bis 21, **dadurch gekennzeichnet, dass** Rechenmittel (26) vorgesehen sind, um ein vom Bildsensor (14) empfangenes Bildsignal hinsichtlich eines verschmutzungsindikativen Signals zu bewerten.

23. Verfahren zum Betreiben einer Kamerasystems nach wenigstens einem der Ansprüche 1 bis 15 mit einer Sensoreinrichtung nach wenigstens einem der Ansprüche 16 bis 22, **dadurch gekennzeichnet, dass** wenigstens ein Prüfstrahl (22) in einen eingangsseitig vor dem Strahlengang (12) angeordneten transparenten Prüfkörper (30) eingekoppelt wird und abhängig von einem Verschmutzungsgrad des Prüfkörpers (30) wenigstens ein verschmutzungsindikativer Teilstrahl (24) aus dem Prüfkörper (30) auf einen Sensor (14a) zum Empfangen des verschmutzungsindikativen Teilstrahls (24) gelenkt und der Teilstrahl (24) hinsichtlich seiner Intensität bewertet wird.

24. Verfahren nach Anspruch 23, **dadurch gekennzeichnet, dass** der Prüfstrahl (22) abhängig von einem festgestellten Bildkontrast ausgesendet wird.

25. Verfahren nach einem der Ansprüche 23 bis 24, **dadurch gekennzeichnet, dass** das Prüflicht mit einer Wellenlänge ausgestrahlt wird, die spezifisch für eine spezifische Verschmutzungsart ist.

26. Verfahren nach einem der Ansprüche 23 bis 25, **dadurch gekennzeichnet, dass** alternierend entweder ein verschmutzungsindikativer Teilstrahl gesendet wird oder der Bildsensor (14) in seinem Normalbetrieb arbeitet.

27. Verfahren nach einem der Ansprüche 23 bis 26, **dadurch gekennzeichnet, dass** der Prüfstrahl (22) abhängig von Betriebsparametern des Kamerasystems ausgesendet wird.

28. Verfahren nach einem der Ansprüche 23 bis 27, **dadurch gekennzeichnet, dass** zur Bewertung der Intensität des Teilstrahls (24) ein Referenzwert bei unverschmutztem Prüfkörper (30) bestimmt wird.

29. Verfahren nach Anspruch 28, **dadurch gekennzeichnet, dass** zur Bewertung der Intensität des Teilstrahls (24) ein gemittelter Referenzwert als Mittelwert von einer Mehrzahl von aufeinanderfolgend bestimmten Referenzwerten gebildet wird.

30. Verfahren nach einem der Ansprüche 23 bis 29, **dadurch gekennzeichnet, dass** ein Alarm ausgelöst wird, wenn die Intensität des Teilstrahls (24) außerhalb einer zulässigen Bandbreite um einen vorgegebenen Referenzwert liegt.
